# EUROPEAN PATENT SPECIFICATION

(11) **EP 3 478 466 B1**
(45) Date of publication and mention of the grant of the patent: **16.03.2022**
(21) Application number: 17820658.7
(22) Date of filing: 29.06.2017
(51) Int. Cl.: B27B 31/06, B27B 31/02, B65G 47/22, B65G 43/08, G01B 11/02

(54) **METHOD AND SYSTEM OF FLOW OPTIMISATION IN A SYSTEM FOR HANDLING TIMBER PIECES**
VERFAHREN UND SYSTEM ZUR OPTIMIERUNG DER STRÖMUNG IN EINEM SYSTEM ZUR HANDHABUNG VON HOLZTEILEN
PROCÉDÉ ET SYSTÈME D'OPTIMISATION DE FLUX DANS UN SYSTÈME DE MANIPULATION DE PIÈCES DE BOIS

(30) Priority: 29.06.2016 SE 1650937
(43) Date of publication of application: 08.05.2019
(73) Proprietor: C. Gunnarssons Verkstads AB, 342 50 Vislanda (SE)
(72) Inventor: GUNNARSSON, Tony, 342 50 Vislanda (SE); GUNNARSSON, Jonas, 340 32 Grimslöv (SE)
(74) Representative: AWA Sweden AB
(86) International application number: PCT/SE2017/050721
(87) International publication number: WO 2018/004441

(56) References cited:
- JP-A- H05 318 407
- US-A- 4 301 373
- US-A- 4 392 204
- US-A- 4 541 722
- US-A- 5 335 790
- US-A1- 2009 095 377
- US-A1- 2010 252 397
- US-A1- 2010 252 397
- US-A1- 2015 197 031
- US-B1- 6 220 423

## Description

### Technical Field

The present invention relates to a method of flow optimisation of a timber flow of mixed dimensions in a system for handling timber pieces and a system for handling timber pieces.

### Technical Background

In sawmills and sorting installations large quantities of timber are transported to various stations. For this purpose different types of devices are used, such as chain transporters, mass conveyors, single pieces feeders, packet stackers, stick stackers etc.

CA 2 853 738 discloses a single piece feeder which feeds one piece of timber at a time from one conveyor belt to another conveyor belt and a control system for controlling the single piece feeder.

A disadvantage of the installation shown on CA 2 853 738 is that the possibilities of optimising the timber flow are limited.

US 5 335 790 A describes a method and device for separating pieces of woods into different qualities. A sorting device is arranged to divert pieces of woods to different conveyors in response to a signal from a data processing unit.

US 2009/095377 A1 describes systems and methods for tracking lumber in a saw mill that includes several processing stations, including a bucking saw station, a gangsaw station, an edger station and a trimmer station.

US 2010/252397 A1 describes a lumber transfer system and a method for individually transferring lumbers from a feeding conveyor to an outfeed conveyor.

JP H05 318407A describes a device for sorting and loading sawed timber.

### Summary of the Invention

The aim of the present invention is to provide a method of flow optimisation in a timber handling system, said method contributing to improved capacity in the system.

This aim is achieved with a method of flow optimisation of a timber flow of mixed dimensions in a timber handling system, this system comprising a timber handling device, a first conveyor belt arranged in connection with the timber handling device which feeds the timber pieces to the timber handling device so that the timber pieces fed to the timber handling device are in contact with each other, a measuring system and a control system for controlling the timber handling device, said method being characterised by at least two timber pieces entering the timber handling device which are in contact with each other, and control, based on measuring data from measurements of said at least two timber pieces, of at least one control parameter in the control system of the timber handling device.

Through measuring, for example, at least three incoming timber pieces in a measuring window directly connected to the timber handling device information is obtained in an early phase which makes it possible to control the timber handling device, such as a single piece feeder in an optimum manner. The measuring system, which is arranged to continually measure the timber pieces being transported on the first conveyor belt and are in contact with each other, is thus connected to the control system and provides it with information about the timber pieces which are on their way to the timber handling device. As at least two incoming timber pieces are measured the control system obtains information at an early stage about which timber dimensions are on the way to the timber handling device and can therefore analyse how the timber handling device must be controlled with regard to the incoming timber pieces. The measurement of several timber pieces gives the control system sufficient time to determine how the timber handling device should be controlled which results in optimum control of the timber handling device. With knowledge of, for example, the thickness and/or width of several incoming timber pieces the control system can optimise the operation of the timber handling device so that a high degree of efficiency and capacity of the system is achieved.

Additionally, measurement identifies operating faults, such as operating faults due to incorrectly placed timber pieces. Operating faults can thus be detected and dealt with effectively at an early stage which leads to fewer stoppages of the system. The method therefore results in a continuous timber flow with a high transporting rate.

The measuring system can also automatically and at an early stage identify defective timber pieces, which facilitates the operation of the system and increases the total capacity of the system.

According to one embodiment measurement comprises the measurement of the width of two incoming timber pieces.

According to another embodiment measurement includes the measurement of the thickness of two incoming timber pieces.

According to one embodiment measurement of said at least two timber piece takes place simultaneously. Through simultaneous measurement of two or more timber pieces, information, such as timber dimensions, about the timber piece on the way to the timber handling device is obtained at an early stage which results in effective controlling of the timber handling device. Through effective control of the timber handling device the capacity of the entire system can be improved considerably.

According to one embodiment measurement of said at least two timber pieces takes place by means of a 3D camera which makes it possible to carry out measurements with image processing without light lines.

According to another embodiment the measurement of said at least two timber pieces is based on triangulation, preferably triangulation with laser light.

According to one embodiment the measurement is carried out when said at least two timber pieces are situated in a measuring window with a defined zero line. The zero line makes it possible to determine how far in front of the timber handling device a timber piece is located, which further improves the possibility of controlling the timber handling device in an effective manner.

According to one embodiment said timber handling device is a single piece feeder. The single piece feeder preferably comprises at least one rotating drum which is provided with a plurality of grip elements.

According to an alternative embodiment the single piece feeder comprises a displacement device provided with hook or support elements.

According to one embodiment said timber handling device is a timber elevator.

A further aim of the present invention is to provide a system for timber handling, said system resulting in improved capacity in the system.

This aim is achieved with a system for handling timber pieces, said system comprising a timber handling device, a first conveyor belt located in connection with this timber handling device which is designed to feed timber pieces to the timber handling device so that the timber pieces supplied to the timber handling device are in contact with each other, a measuring system and a control system for controlling of the timber handling device. The measuring system is preferably arranged in order, during operation of the device, to measure at least the thickness or width of at least two timber pieces entering the timber handling device and transfer the measured data to the control system. The system has many advantages, many of which have been described above in connection with the method according to the invention.

According to one embodiment the measuring system is an optical measuring system which results in effective and reliable measuring. The measuring system can thus comprise a camera which is capable of detecting reflected light, preferably in the form reflected laser light.

According to one embodiment the measuring system comprises a 3D camera which makes it possible to carry out measurements with imaging without light lines.

The measuring system preferably functions in accordance with the principle of triangulation.

According to one embodiment the measuring system is arranged to measure by means of triangulation and preferably with the aid of laser triangulation.

According to one embodiment the measuring system comprises a ramp device under the first conveyor belt which in an active position is arranged to come into contact with and tilt at least a first timber piece in a measuring window so that a wedge-shaped gap is formed between the back edge of the tilted timber piece and the front edge of a following timber piece. This embodiment has the advantage that reliable measurement can be achieved even when handling timber pieces with the same dimensions.

According to one embodiment includes said ramp device and curved surface which make it possible to simultaneously measure, for example, three timber pieces which have the same thickness.

According to one embodiment said ramp device can be raised and lowered by means of a lifting device between an inactive position and an active position. The lifting device allows the ramp to be activated in a flexible manner as required. This embodiment thus has the advantage that the measuring system can be easily adapted for reliable measurement of timber pieces with mixed dimensions or timber pieces with the same dimensions.

According to one embodiment said timber handling device is a single piece feeder. The single piece feeder preferably comprises at least one rotating drum which is provided with a plurality of grip elements.

According to an alternative embodiment the single piece feeder comprises a displacement device provided with hook or support elements.

According to one embodiment said timber handling device is a timber elevator.

Further aims and features of the present invention will be set out in the following description and patent claims. The invention is defined in the appended independent claims 1 and 10.

### Brief description of the Drawings

The invention will now be described in more detail with reference to the attached drawings.
Fig. 1 is a perspective view and shows a system for handling timber pieces according to one embodiment of the present invention.
Figs. 2a-d illustrate a measuring system forming part of the system shown in fig. 1.
Figs. 3a-b illustrate a ramp device forming part of the system shown in fig. 1.

### Description of Preferred Embodiments

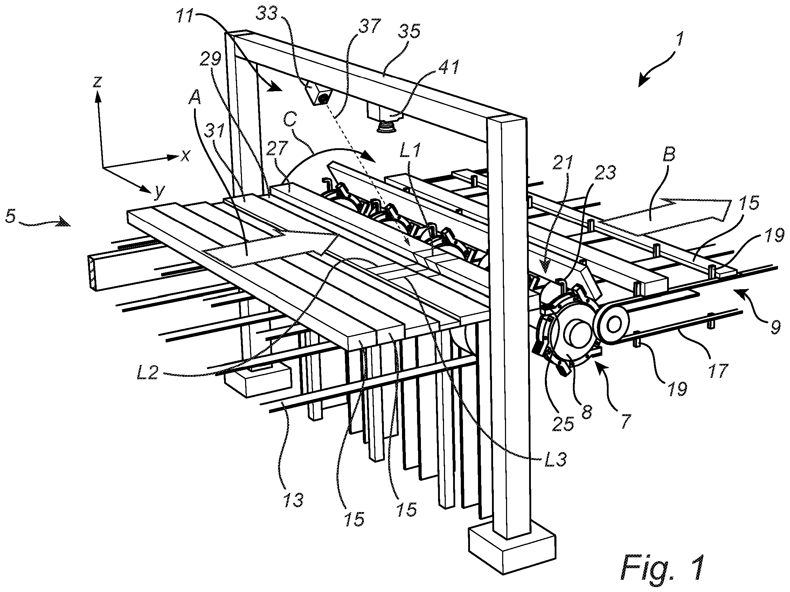

Fig. 1 illustrates a system 1 for handling timber pieces 15 in a sawmill. The system 1 comprises a first conveyor belt 5 in the form of chain transporter, a timber handling device in the form of a single piece feeder 7 arranged downstream of the first conveyor belt 5, a second conveyor belt 9 in the form of a mass conveyor downstream of the timber handling device 7 and a measuring system 11.

The first conveyor belt 5 comprises a plurality of horizontal transporting chains 13 arranged at the side of each other which supply the timber pieces 15 to the single piece feeder 7 in a transporting direction which is illustrated by the arrow A in figure 1. The first conveyor belt 5 is arranged to supply the timber pieces 15 in such a way that the supplied timber pieces are in contact with each other.

The second conveyor belt 9 comprises a plurality of horizontal transporting chains 17, in the form of carrier chains 17 at the side of each other which are arranged to transport evenly spaced timber pieces 15, as illustrated by the arrow B in fig. 1. Each transporting chain 17 thus has carriers 19 which are arranged at even intervals and to push the timber pieces 15 from behind.

The single piece feeder 7 is arranged to displace the timber pieces 15 one by one from the first conveyor belt 5 to the second conveyor belt 9 which is shown by the arrow C in fig. 1. For this purpose the single piece feeder 7 has plurality of rotating drums 8 which are driven synchronously with the second conveyor belt 9 and which are each provided with a plurality of grip elements 21. Each grip element 21 has a movably arranged grip arm 23 and a holder 25. The single piece feeder 7 moves the timber pieces 15 from the first conveyor belt 5 to the second conveyor belt 9 in that the grip element 21 grips a timber piece 15 located on the first conveyor belt 5 moves it and releases it between the carriers 19 on the second conveyor belt 9, i.e. the carrier conveyor 9. The carrier conveyor 9 then transports the timber piece further in the transporting direction.

A not shown control system, in the form of a programmable control unit (PLC) is provided for controlling the single piece feeder 7 based on measuring data from the measuring system 11. The control system is designed to receive measuring data from the measuring system 11 and, based on the received data, continually produce machine data formulas for the single piece feeder 7. The control system analyses measuring data from the measuring system 11 and continually produces a new machine data formula with control parameters such as feed rate, clamping position, release position, clamping moment, position where hooks should be concealed etc. which are adjusted for a quantity, in this case three, of timber pieces 27, 29, 31 on their way into the single piece feeder 7. Each machine data formula can, for example, contain control parameters which are compiled in order to optimally control the single piece feeder 7 for moving the three incoming timber pieces 27, 29, 31 to the carrier conveyor 9. By continually producing machine date formulas which are based on measurements of the timber pieces on their way to the single piece feeder 7, the operating conditions of the single piece feeder 7 are adjusted for the current timber pieces through which the flow through the device is optimised. The control unit thus has access at all times to information about which timber dimensions are their way to the single piece feeder 7 and through this can constantly produce machine data formulas which are adapted to the incoming timber pieces, resulting in optimum operation of the single piece feeder 7 and the second conveyor belt 9, which in turn results in very high efficiency and capacity of the system 1.

The measuring system 11 is arranged to simultaneously measure several measuring parameters such as, for example, dimensions and position at which the timber pieces 27, 29, 31 are in a measuring window with a defined zero line and in contact with each other. The measuring system 11, which operates in accordance with the triangulation principal, therefore simultaneously measures the dimensions and position of a number, for example three, pieces of timber 3 entering the single piece feeder 7. After measurement the measuring data are transferred to the control unit which analyses the transferred measuring data and produces a machine data formula for optimum control of the single piece feeder 7. As at least two, and preferably three, incoming timber pieces are measured at the same time, the control system knows an early stage which timber dimensions are on their way to the single piece feeder 7, which gives the control system sufficient time to continuously control the individual piece feeder 7 in an optimum manner.

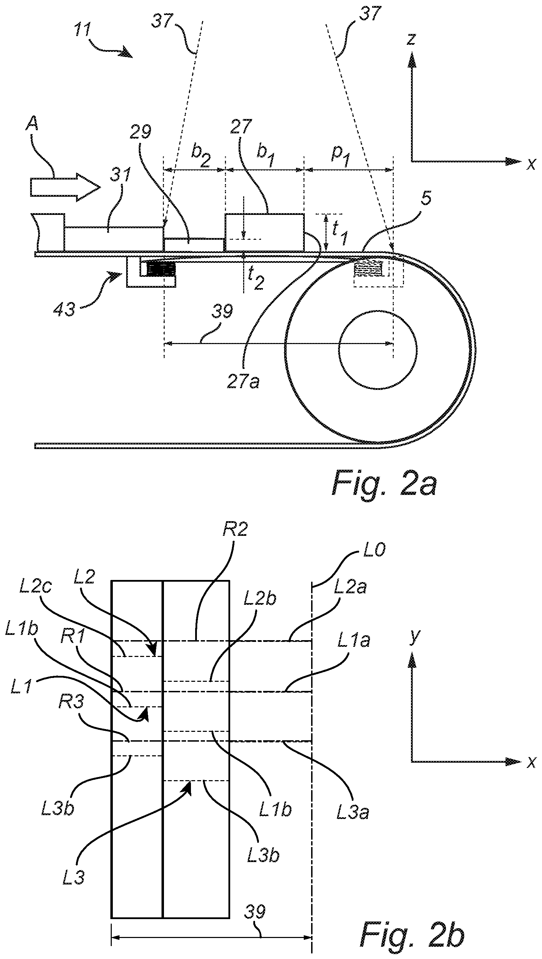

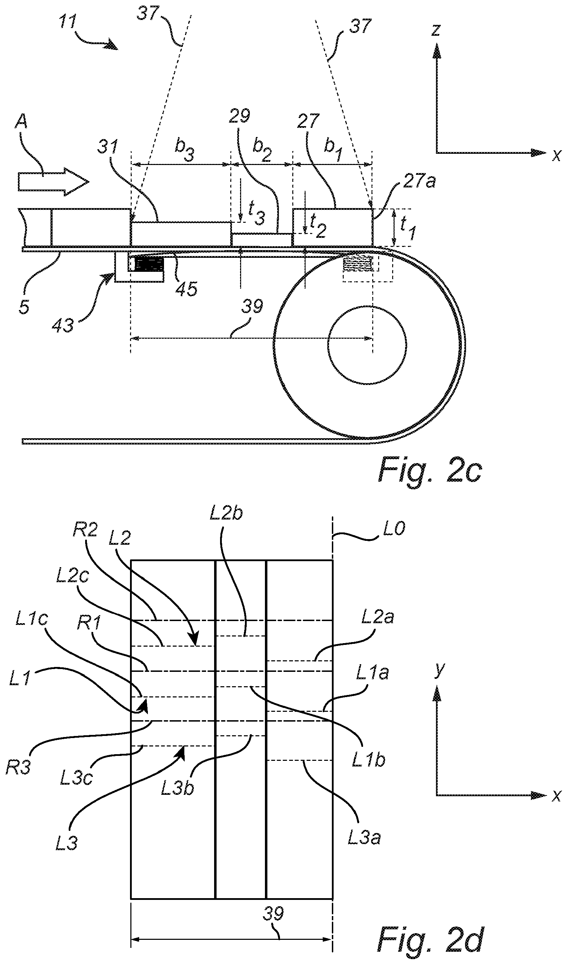

The measuring system 11 comprises an optical transmitter 35 in the form of a laser transmitter 33 which is supported by a stand 35 and designed to emit a beam of light 27, which is shown schematically in fig. 1, towards the timber piece 27, 29, 31 which is being transported on the first conveyor belt 5 and is located in a measuring window 39 (see fig. 2a). As can be seen in figure 2a the measured timber piece is in contact with one or two adjacent timber piece(s). The first timber piece 27, i.e. the timber piece located furthest forward in the measuring zone 39 is in contact with the other timber pieces 29 which are also in the measuring zone 39. The second timber piece 29 is in contact with the first timber piece 27 and with the third timber piece 31 which is on its way into the measuring zone 39.

The measuring system 11 also comprises a radiation sensor 41, supported by a stand 35, which is arranged to detect and analyse reflected radiation 37. The optical radiation sensor 41 provides contact-free measurement of, for example, distance, thickness and width. The reflected radiation is illustrated by three laser lines L1, L2, L3 in fig. 1.

The radiation sensor 41, which comprises a camera which detects the reflected radiation, i.e. laser lines L1, L2, L3 can, though analysing the reflected radiation, determine the timber pieces' 27, 29, 31 thickness, width and distance from the zero line to the timber piece. Based on this measuring data the measuring system can calculate the angle of the timber piece in relation to the zero line.

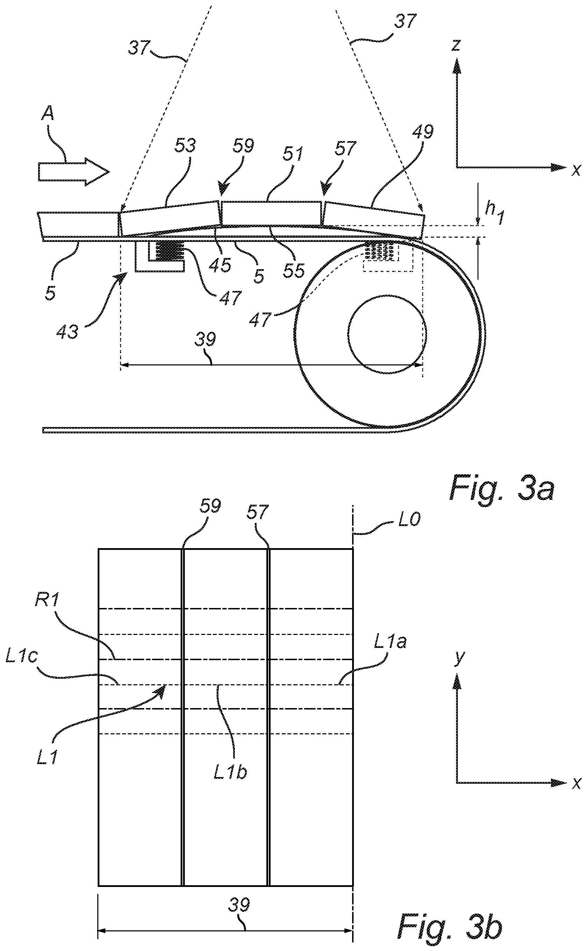

A prism, which is not shown, is arranged to divide the laser beam emitted by the laser emitter into a plurality of laser beams, each one of which is reflected by the timber pieces located in the measuring window, which is illustrated by means of two laser lines L2, L3 in fig. 3 parallel to the first laser line L1. By studying a plurality of laser lines and comparing data from these a quality value of the measurement can be obtained. In order to show this as an example three parallel laser lines L1, L2, L3 are shown in fig. 1, but it is evident that the measuring system 11 can use a smaller number of lines, such as one or two lines, or a larger number of lines, for example, nine, laser lines.

The function of the measuring system 11 is now shown further with reference to fig. 2a-d. Fig 2a shows a moment when two timber pieces 27, 29 are entirely in the measuring window 39 of the measuring system 11 and a third timber piece 31 is on its way into the measuring window 39. The thickness and width of the first timber pieces are designated t₁ and b₁ respectively and the thickness and width of the second timber piece are designated t₂ and b₂ respectively. In addition, the distance from the zero line L0 of the measuring window 39 to front edge 27a of the first timber piece is designated p₁.

Radiation is reflected by each of the first and the second timber pieces 27, 29 which are both located in the measuring window 39 and by the conveyor belt 5 as no timber piece is directly adjacent to the zero line L0 of the measuring window. The reflected radiation is detected by the radiation sensor 41 and analysed by the control unit in order to determine the thickness, width and position of both boards 27, 29. The thickness of the boards 27, 29 is determined by means of triangulation.

Fig 2a which shows the measuring window 39 from above illustrates the radiation by way of three parallel lines L1, L2, L3. Each laser line L1, L2, L3 has three line segments, which are shown in fig. 2b. The first laser line L1 thus has a first line segment L1a, a second line segment L1b and a three line segment L1c. Also shown in fig. 2b are three reference line R1, R2, R2 which are used in the analysis of the reflected radiation. The radiation sensor 41 thus detects the three lines L1, L2, L3 and compares each of them with the respective reference line R1, R2, R3 and through this can determine the thickness, width and position of both boards. In addition, the angle of the boards to the zero line L0 can also be determined. A quality value is obtained in that a plurality of parallel lines, in this case the three lines L1, L2 and L3 are analysed during measurement.

The length of the first line's L1 first line segment L1a corresponds to the distance from the zero line L0 to the front edge 27a of the first timber piece 27, the length of the first line's L1 second line segment L1b corresponds to width b₁ of the timber piece, and the first line's L1 third line segment L1c correspond to the width b₂ of the second timber piece 29.

The position of the first line's L1 second segment L1b in the y direction correspond to the thickness t₁ of the first timber piece 27 and the first line's L1 third line section L1c in the y direction corresponds to the thickness t₂ of the other timber piece 29.

Figure 2c-d illustrates a later moment in which the conveyor belt 5 has fed the timber pieces 27, 29, 31 shown in fig. 2a in the direction of the zero line L0 of the measuring window. The timber pieces 27, 29, 31 have been fed in to such an extent that the front edge 27a of the first timber piece 27 is in line with the zero line L0. At this moment the first, the second and the third timber piece 27, 29, 31 are situated in the measuring window 39.

Fig. 2b which shows the measuring window 39 from the top, illustrates by way of three parallel lines L1, L2, L3 the radiation reflected by the timber pieces 27, 29, 31 and three reference lines R1 ,R2, R3 which are used in the analysis of the reflected radiation.

As has been described above, each laser line L1, L2, L3 has three line segments.

At this moment the length of the first line segment L1 a of the first line L1 corresponds to the width b₁ of the first timber piece, the length of the second line segment of the first lien corresponds to the width b₂ of the second timber piece and the length of the thirds line segment L1c of the first line L1 corresponds to the width b₃ of the third timber section 31.

In fig 3d the distance of the first segment L1a of the first laser line L1 to the first reference line R1 in the longitudinal direction, i.e. the y direction, of the timber piece corresponds at this moment to the thickness t₁ of the first timber piece, the distance of the second segment L1b of the first laser L1 to the first reference line R1 in the longitudinal direction of the timber pieces corresponds to the thickness t₂ of the second timber piece and the distance of the third segment L1a of the first laser line 1 to the first reference line R1 corresponds at this moment to the thickness t₃ of the third timber piece.

Described above is a measuring method which normally functions in a reliable manner and which accurately provides information such as the thickness and width of timber pieces on their way to the single piece feeder 7. The above-described measuring method is based on the fact that a number, preferably three, of timber pieces are measured using one or more laser lines, which normally provides a measuring result of good accuracy when mixed timber dimensions are being transported in the device. However, there are situations in which the above-described measurement has to be modified somewhat in order to obtain reliable measuring results. For example, the measuring method has to be modified when timber pieces each with the same dimensions are transported in the system as in this case with the measurements described with reference to fig.2a-d it can be difficult to distinguish individual timber pieces and thereby determine the dimensions of the individual timber pieces. This is because the reflected laser light can be detected as a single continuous laser line instead of three line segments and is therefore interpreted incorrectly, i.e. as one timber piece instead of as three individual work pieces.

In order to prevent incorrect interpretation of the timber pieces when they are being transported in one and the same dimension, the system 1 has a ramp device 43 which is moveable in a vertical direction. The ramp device 43 comprises a curved surface and an actuator, which is schematically shown by two springs 47 in the drawings, for displacing the arched surface 45 in the vertical direction (z direction). The ramp device 43 can thus be displaced between an active position in which timber pieces 49, 51, 53 being supplied on the conveyor belt 5 are forced to pass over a ridge 55 and are inclined with regard to each other. By means of the lifting device 47 the ramp device 43 can be displaced between the inactive position illustrated in fig. 2a and the active position illustrated in fig. 3a. When the ramp device 43 is in the active position the ramp device's arched surface 45 form an "obstacle" in the measuring area 39, said obstacle forcing the timber pieces 49, 51 53 to be temporarily inclined with regard to each other. The curved surface 45 is formed so that a wedge-shaped gap 57, 59 is formed between two timber pieces which makes it possible to distinguish two timber pieces 49, 51 with the same dimensions from each other. This is exemplified in fig. 3a by way of a first gap 57 between a first timber piece 49 and a second timber piece 51 and a second gap 59 between the second timber piece 51 and a third timber piece 53. The two gaps thus make it possible to distinguish the laser lines' line segment L1a, L1b, L1c, as shown in fig. 3d, and it thereby allows measurement of the timber pieces in the same way as has been described with reference to figs. 2a-d.

As shown in fig. 3a the supplied timber pieces are also in contact with one or two adjoining timber piece(s) when the ramp device 43 is in the active position. A lower part of the first timber section 49, i.e. the timber piece which is further forward in the measuring zone 39, is in contact with a lower part of the second timber piece 51 and a lower part of the second timber piece 51 is in contact with a lower part of the first timber piece 49 and with a lower part of the third timber piece 53.

The system 1 can thus transport timber pieces with different dimensions as well as timber pieces with the same dimensions.

In a method according to the present invention the timber flow in the system 1 is optimised through measurement of a least two timber pieces 27, 29 entering the timber handling device 7 which are in contact with each other and through controlling, based on the results of measurement, of at least a first control parameter in the control system of the timber handling device 7.

The timber flow is thus optimised through first measuring incoming timber pieces 27, 29, 31, then analysing the measurements in order to produce control parameters for the timber handling device and then controlling the timber handling device with the support of the produced control parameters.

As the measurement provides information about at least two incoming timber pieces this method offers very good possibilities for optimising the control of a timber handling device, such as a single piece feeder, and thereby the timber flow through an device located downstream of the timber handling device, such as, for example, a trimmer/sorting device or a packet stacker.

Measuring preferably involves measurement of the thickness and/or the width of at least two incoming timber pieces. Measurement can also involve measuring an angle between the longitudinal direction of the timber piece and the direction of feeding. Measurement of said two incoming timber pieces is preferably carried out simultaneously.

Measurement is preferably carried out when said at least two timber pieces 27, 29, 31 are located in a measuring window 39 with a defined zero line L0.

It is evident that many variants of the above-described forms of embodiment are possible within the scope of the attached patent claims.

It has been described above that the timber handling device is a single piece feeder which comprises a rotating drum provided with grip elements. It is clear that the single piece feeder can be another type of single piece feeder. The single piece feeder can for example be of a type comprising a displacing device provided with hook elements or catch elements for the piece by piece feeding of the timber pieces. It is also evident that the timber handling device does not necessarily have to be a single piece feeder but can also be another type of timber handling device such as a timber elevator for example.

It has been described above that the measurement of timber pieces is carried out using laser light. It is evident that optical measurement can be carried out with other types of light, such as, for example, IR light, which can be used instead of laser light.

It is also clear that measurement can be carried out using cameras and imaging without light lines.

## Claims

1. Method of flow optimisation of a timber flow with mixed dimensions in a system (1) for handling timber pieces, said system comprising
a timber handling device (7), and, arranged in connection with the timber handling device (7) a first conveyor belt (5) which supplies the timber pieces (15, 27, 29, 31) to the timber handling device (7) so that timber pieces being supplied to the timber handling device are in contact with each other, a measuring system (11) and a control system for controlling the timber handling device, said method **characterised by**
measurement of at least two timber pieces (27, 29, 31) entering the timber handling device (7) which are in contact with each other and are on the first conveyor belt (5) and
controlling, based on measuring data from the measurement of said at least two timber pieces, of at least a first control parameter in the control system of the timber handling device (7) to optimise the timber flow.

2. Method according to claim 1 in which measurement involves measuring the width (b₁, b₂, b₃) of said at least two incoming timber pieces.

3. Method according to any one of the preceding claims in which measurement involves measuring the thickness (t₁, t₂, t₃) of said at least two incoming timber pieces.

4. Method according to any one of the preceding claims in which measurement of said at least two timber pieces is carried out simultaneously.

5. Method according to any one of the preceding claims in which measurement of said at least two timber pieces is carried out using a camera (41).

6. Method according to any one of the preceding claims in which measurement of said at least two timber pieces (27, 29, 31) is based on triangulation, preferably triangulation with laser light (37).

7. Method according to any one of the preceding claims in which measurement is carried out when said two timber pieces (27, 29, 31) are located in a measuring window (39) with a defined zero line (L0).

8. Method according to any one of the preceding claims in which said timber handling device is a single piece feeder (7).

9. Method according to any one of claims 1 to 7 in which said timber handling device is a timber elevator.

10. System for handling timber pieces (15) with mixed dimensions, said system (1) comprising a
single piece feeder (7), and a first conveyor belt (5) situated in connection with the single piece feeder (7) which is arranged to supply the timber pieces (15) to the single piece feeder (7) so that the timber pieces being supplied to the single piece feeder (7) are in contact with each other, a measuring system (11) and a control system for controlling the single piece feeder (7),
**characterised in that**
during operation of the system (1) the measuring system (11) is arranged to measure at least the thickness and width of two (27, 29, 31) timber pieces (27, 29, 31) entering the single piece feeder (7) on the first conveyor belt (5) and to transfer the measuring data to the control system,
the control system being arranged to control the single piece feeder (7) to optimise the timber flow .

11. System according to claim 10 in which the measuring system (11) is an optical measuring system.

12. System according to any one of claims 10-11 in which the measuring system (11) is designed to measure using a camera (41).

13. System according to any one of claims 10-12 in which the measuring system (11) is designed to measure using triangulation and preferably using laser triangulation.

14. System according to any one of claims 10-13 in which the measuring system (11) comprises a ramp device (43) arranged under the first conveyor belt (5) which, in an active position, is designed to come into contact with and incline at least one first timber piece (49, 51, 53) in a measuring window so that a wedge-shaped gap (57, 59) is formed between the inclined rear edge of the timber piece (49) and the front edge of a following timber piece (51).

15. System according to claim 14 in which said ramp device comprises a curved surface (45).

16. System according to any one of claims 14-15 in which said ramp device (43) can be raised and lowered by means of a lifting device (47) between an inactive position and active position.

## Patentansprüche

1. Verfahren zur Strömungsoptimierung eines Holzflusses mit gemischten Dimensionen in einer Anlage (1) zur Handhabung von Holzstücken, umfassend:
eine Holzhandhabungsvorrichtung (7) und angeordnet in Verbindung mit der Holzhandhabungsvorrichtung (7) ein erstes Förderband (5), das die Holzstücke (15, 27, 29, 31) der Holzhandhabungsvorrichtung (7) zuführt, so dass die der Holzhandhabungsvorrichtung zugeführten Holzstücke in Kontakt miteinander sind, ein Messsystem (11) und ein Steuersystem zur Steuerung der Holzhandhabungsvorrichtung, wobei das Verfahren **gekennzeichnet ist durch**
Vermessung von wenigstens zwei in die Holzhandhabungsvorrichtung (7) einlaufenden Holzstücken (27, 29, 31), die in Kontakt miteinander und auf dem ersten Förderband (5) sind und
Steuern, basierend auf Messdaten aus der Messung der wenigstens zwei Holzstücke, von wenigstens einem ersten Steuerparameter in dem Steuersystem der Holzhandhabungsvorrichtung (7) zur Optimierung des Holzflusses.

2. Verfahren nach Anspruch 1, bei dem die Messung das Messen der Breite (b₁, b₂, b₃) der wenigstens zwei ankommenden Holzstücke umfasst.

3. Verfahren nach einem der vorhergehenden Ansprüche, bei dem die Messung das Messen der Dicke (t₁, t₂, t₃) der wenigstens zwei ankommenden Holzstücke umfasst.

4. Verfahren nach einem der vorhergehenden Ansprüche, bei dem die Messung der wenigstens zwei Holzstücke gleichzeitig durchgeführt wird.

5. Verfahren nach einem der vorhergehenden Ansprüche, bei dem die Messung der wenigstens zwei Holzstücke unter Verwendung einer Kamera (41) erfolgt.

6. Verfahren nach einem der vorhergehenden Ansprüche, bei dem die Messung der wenigstens zwei Holzstücke (27, 29, 31) auf Triangulation, vorzugsweise Triangulation mit Laserlicht (37), basiert.

7. Verfahren nach einem der vorhergehenden Ansprüche, bei dem die Messung erfolgt, wenn sich die beiden Holzstücke (27, 29, 31) in einem Messfenster (39) mit definierter Nulllinie (L0) befinden.

8. Verfahren nach einem der vorhergehenden Ansprüche, bei dem die Holzhandhabungsvorrichtung eine Einzelstückzuführung (7) ist.

9. Verfahren nach einem der Ansprüche 1 bis 7, bei dem die Holzhandhabungsvorrichtung ein Holzaufzug ist.

10. System zur Handhabung von Holzstücken (15) mit gemischten Abmessungen, wobei das System (1) eine Einzelstückzuführung (7) und ein erstes Förderband (5), das in Verbindung mit der Einzelstückzuführung (7) angeordnet ist, um die Holzstücke (15) zur Einzelstückzuführung (7) zuzuführen, damit die der Einzelstückzuführung (7) zugeführten Holzstücke sich berühren, ein Messsystem (11) und ein Steuerungssystem zum Steuern der Einzelstückzuführung (7) umfasst,
**dadurch gekennzeichnet, dass**
während des Betriebs des Systems (1) das Messsystem (11) so angeordnet ist, um wenigstens die Dicke und Breite von zwei (27, 29, 31) Holzstücken (27, 29, 31) zu messen, die am ersten Förderband (5) in die Einzelstückzuführung (7) eintreten, und um die Messdaten an die Steuerung zu übertragen, wobei das Steuersystem so angeordnet ist, dass es die Einzelstückzuführung (7) steuert, um den Holzfluss zu optimieren.

11. System nach Anspruch 10, bei dem das Messsystem (11) ein optisches Messsystem ist.

12. System nach einem der Ansprüche 10-11, bei dem das Messsystem (11) zum Messen mit einer Kamera (41) ausgestaltet ist.

13. System nach einem der Ansprüche 10-12, bei dem das Messsystem (11) für die Messung mittels Triangulation und vorzugsweise mittels Lasertriangulation ausgelegt ist.

14. System nach einem der Ansprüche 10-13, bei dem das Messsystem (11) eine Rampenvorrichtung (43) umfasst, die unter dem ersten Förderband (5) angeordnet ist, das in einer aktiven Position dazu ausgelegt ist, mit wenigstens einem ersten Holzstück (49, 51, 53) in einem Messfenster in Kontakt zu kommen und es so in eine geneigte Position zu bringen, dass zwischen der geneigten Hinterkante des Holzstückes (49) und der Vorderkante eines nachfolgenden Holzstückes (51) ein keilförmiger Spalt (57, 59) gebildet wird.

15. System nach Anspruch 14, bei dem die Rampenvorrichtung eine gekrümmte Oberfläche (45) umfasst.

16. System nach einem der Ansprüche 14-15, bei dem die Rampenvorrichtung (43) mittels einer Hebevorrichtung (47) zwischen einer inaktiven Position und einer aktiven Position angehoben und abgesenkt werden kann.

## Revendications

1. Procédé d'optimisation de flux dans un flux de pièces de bois aux dimensions mélangées dans un système (1) de manipulation de pièces de bois, ledit système comprenant :
un dispositif de manipulation de pièces de bois (7) et, agencée en connexion avec le dispositif de manipulation de pièces de bois (7), une première courroie de convoyeur (5) qui fournit les pièces de bois (15, 27, 29, 31) au dispositif de manipulation de pièces de bois (7) de façon à ce que les pièces de bois en train d'être fournies au dispositif de manipulation de pièces de bois soient en contact l'une avec l'autre, un système de mesure (11) et un système de commande pour commander le dispositif de manipulation de pièces de bois, ledit procédé étant **caractérisé par**
la mesure d'au moins deux pièces de bois (27, 29, 31) entrant dans le dispositif de manipulation de pièces de bois (7) qui sont en contact l'une avec l'autre et sont sur la première courroie de convoyeur (5) et la commande, en se basant sur des données de mesure venant de la mesure desdites au moins deux pièces de bois, d'au moins un premier paramètre de commande dans le système de commande du dispositif de manipulation de pièces de bois (7) pour optimiser le flux de pièces de bois.

2. Procédé selon la revendication 1, dans lequel la mesure implique de mesurer la largeur (b₁, b₂, b₃) desdites au moins deux pièces de bois entrantes.

3. Procédé selon l'une quelconque des revendications précédentes, dans lequel la mesure implique de mesurer l'épaisseur (t₁, t₂, t₃) desdites au moins deux pièces de bois entrantes.

4. Procédé selon l'une quelconque des revendications précédentes, dans lequel la mesure desdites au moins deux pièces de bois est effectuée simultanément.

5. Procédé selon l'une quelconque des revendications précédentes, dans lequel la mesure desdites au moins deux pièces de bois est effectuée en utilisant une caméra (41).

6. Procédé selon l'une quelconque des revendications précédentes, dans lequel la mesure desdites au moins deux pièces de bois (27, 29, 31) est basée sur la triangulation, de préférence la triangulation à la lumière laser (37).

7. Procédé selon l'une quelconque des revendications précédentes, dans lequel la mesure est effectuée lorsque lesdites deux pièces de bois (27, 29, 31) sont situées dans une fenêtre de mesure (39) avec une ligne zéro définie (L0).

8. Procédé selon l'une quelconque des revendications précédentes, dans lequel ledit dispositif de manipulation de pièces de bois est un distributeur de pièces individuelles (7).

9. Procédé selon l'une quelconque des revendications 1 à 7, dans lequel ledit dispositif de manipulation de pièces de bois est un élévateur de pièces de bois.

10. Système de manipulation de pièces de bois (15) aux dimensions mélangées, ledit système (1) comprenant un distributeur de pièces individuelles (7) et une première courroie de convoyeur (5) située en connexion avec le distributeur de pièces individuelles (7) qui est agencée pour fournir les pièces de bois (15) au distributeur de pièces individuelles (7) de façon à ce que les pièces de bois en train d'être fournies au distributeur de pièces individuelles (7) soient en contact l'une avec l'autre, un système de mesure (11) et un système de commande pour commander le distributeur de pièces individuelles (7),
**caractérisé en ce que**
pendant le fonctionnement du système (1), le système de mesure (11) est agencé pour mesurer au moins l'épaisseur et la largeur de deux pièces de bois (27, 29, 31) entrant dans le distributeur de pièces individuelles (7) sur la première courroie de convoyeur (5) et pour transmettre les données de mesure au système de commande, le système de commande étant agencé pour commander le distributeur de pièces individuelles (7) à optimiser le flux de pièces de bois.

11. Système selon la revendication 10, dans lequel le système de mesure (11) est un système de mesure optique.

12. Système selon l'une quelconque des revendications 10-11, dans lequel le système de mesure (11) est conçu pour mesurer en utilisant une caméra (41).

13. Système selon l'une quelconque des revendications 10-12, dans lequel le système de mesure (11) est conçu pour mesurer en utilisant la triangulation, de préférence la triangulation à la lumière laser.

14. Système selon l'une quelconque des revendications 10-13, dans lequel le système de mesure (11) comprend un dispositif de rampe (43) agencé sous la première courroie de convoyeur (5), qui, dans une position active, est conçu pour venir en contact avec et incliner au moins une première pièce de bois (49, 51, 53) dans une fenêtre de mesure de façon à ce qu'un espace cunéiforme (57, 59) soit formé entre le bord arrière incliné de la pièce de bois (49) et le bord avant d'une pièce de bois (51) suivante.

15. Système selon la revendication 14, dans lequel ledit dispositif de rampe comprend une surface incurvée (45).

16. Système selon l'une quelconque des revendications 14-15, dans lequel ledit dispositif de rampe (43) peut être élevé et abaissé au moyen d'un dispositif de levage (47) entre une position inactive et une position active.
